# EUROPEAN PATENT APPLICATION

(11) **EP 2 077 449 A1**
(43) Date of publication of application: **08.07.2009**
(21) Application number: 06811758.9
(22) Date of filing: 13.10.2006
(51) Int. Cl.: G01N 23/22, G01B 15/04

(54) **REVERSE X-RAY PHOTOELECTRON HOLOGRAPHY DEVICE AND ITS MEASURING METHOD**

(71) Applicant: Tohoku University, Aoba-ku Sendai-shi Miyagi 980-8577 (JP); Japan Synchrotron Radiation Research Institute, Sayo-gun, Hyogo, 679-5198 (JP)
(72) Inventor: HAYASHI, Koichi, Sendai-shi Miyagi 980-8577 (JP); MATSUBARA, Eiichiro, Sendai-shi Miyagi 980-8577 (JP); MATSUSHITA, Tomohiro, Sayo-gun Hyogo 679-5198 (JP)
(74) Representative: WSL Patentanwälte
(86) International application number: PCT/JP2006/320480
(87) International publication number: WO 2008/044315

(57) **Abstract**

[PROBLEMS] To provide a reverse X-ray photoelectron holography device, in which energy control and convergence are facilitated and a hologram of good contrast is obtained; and to provide its measuring method. [MEANS FOR SOLVING PROBLEMS]

A reverse X-ray photoelectron holography measuring method where a measurement sample is irradiated with an electron beam, incident angle and rotation angle of the electron beam are varied by varying the posture of the measurement sample to the electron beam, and a variation in intensity of characteristic X-ray emitted when the measurement sample is excited is recorded as the atomic resolution hologram around the atom of a specific element, wherein, when the intensity is detected as the characteristic X-ray of the atom of the measurement sample, an object wave is generated as an electron wave scattered by the reference wave and the proximity atom in a holography where electrons incident to the measurement sample reach an atom generating specific X-ray as an electron wave, and an interference pattern is formed by compounding the reference wave with the object wave, thus monitoring the intensity of an electron beam.

## Description

### TECHNICAL FIELD

The present invention relates to a inverse X-ray photoelectron holography measurement device for irradiating a measurement sample with an electron beam, detecting the intensity distribution pattern of an emitted characteristic X-ray, and using a Fourier transform to acquire an image, and also relates to a measurement method thereof.

### BACKGROUND ART

X-ray photoelectron holography and fluorescent X-ray holography techniques are effective in determining the crystalline structure of miniaturized electronic devices or thin-film materials and other industrial materials, evaluating crystalline properties, and analyzing local structures and structural changes due to temperature variations and chemical variations, and involve obtaining three-dimensional images of structures of the environment on the atomic level around an atom of a specific element. These techniques are currently providing important knowledge in explaining the functions of advanced materials, such as providing analyses of dopants or surface adsorbates in semiconductors, or local structures in materials and are gaining attention from many researchers participating in materials development.

Next, the X-ray photoelectron holography technique will be described. This technique comprises acquiring and analyzing angular intensity distribution patterns of photoelectrons emitted when a measurement sample is irradiated with monochromatic X-rays. Namely, atomic images of the measurement sample can be obtained by performing a Fourier transform on the resulting photoelectron distribution patterns. Because the atomic images of the measurement sample can be observed in three dimensions, application [of these techniques] (*1) in a wide range of technical fields is expected.

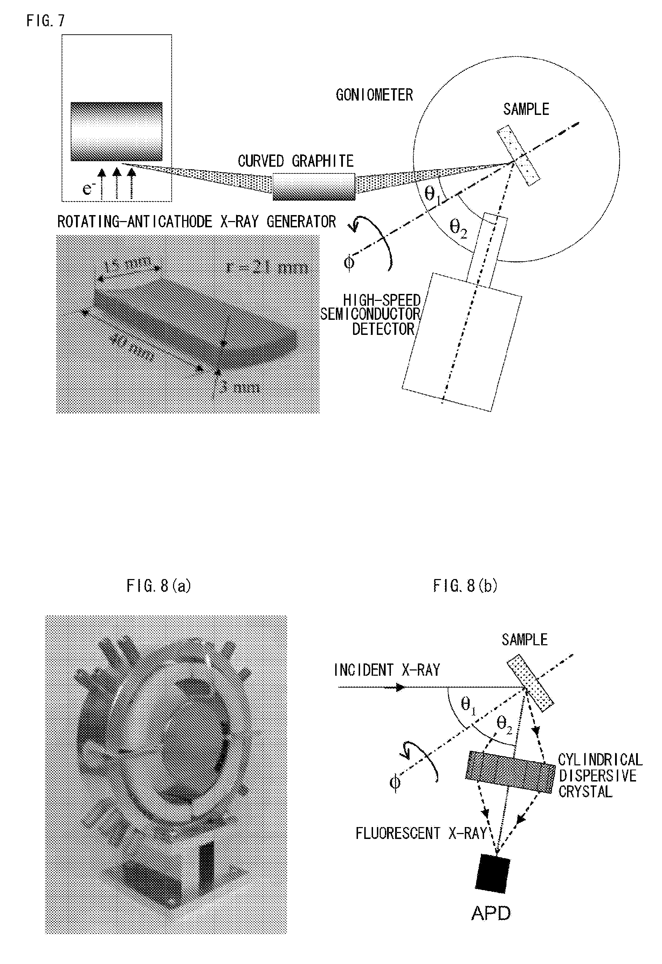

Examples of similar types of structural analysis techniques include fluorescent X-ray holography and laboratory fluorescent X-ray holography measurement devices designed for use in individual research laboratories. A laboratory fluorescent X-ray holography measurement device is described using FIG. 7. In FIG. 7, a powerful rotating-anticathode X-ray generator (M21X, made by the now-defunct Mac Science) having a maximum output of 21 kW was used as the X-ray generator. A cylindrical graphite X-ray collecting element made by Matsushita Electric Industrial was used as a monochromator. An advantage of the cylindrical graphite X-ray collecting element is that the element is formed to have a large curvature and superior precision. The optical element can receive white X-rays from a generator at wide solid angles, disperse or collect X-ray, and therefore obtain bright monochromatic X-rays. The monochromated X-ray energy can be adjusted by varying the distance between the target and the graphite, and can be used to measure the MoKα and Kβ characteristic X-rays in the case of a Mo target.

FIG. 8 is used to describe a high-speed fluorescent X-ray holography measurement device premised on the use of a radiation testing facility at which highly intense monochromatic X-rays can be obtained.
An advantage of radiation X-ray in the high-speed fluorescent X-ray holography measurement device is that it is possible to obtain X-rays that are brighter than from an ordinary X-ray generator, and operation based on manipulating the energy variability produces a higher effect. Hologram measurements of radiation X-ray use numerous inverse modes in which a hologram can be measured by the interference between incident X-rays.

On the other hand, because a provided beam can be used only for several days, measurement of a single hologram must be completed in several hours. It is therefore important to develop a system which can detect fluorescent X-rays at a count rate of one million or greater counts per second. One typical example of a high-speed X-ray detector is an avalanche photodiode (Avalanche Photo diode; APD), which can take measurements at up to 100 million counts per second. Because this method of measurement does not have any energy resolution, a way to disperse only fluorescent X-rays using a dispersive crystal must be devised. In this case, a crystal (LiF, graphite) processed into a cylindrical shape such as the one shown in FIG. 8(a) is used, the arrangement shown in FIG. 8(b) is adopted, and X-ray is dispersed and collected onto the detection plane of the APD. When this system is used, a single hologram can be measured in approximately two to three hours, and a sufficient number of hologram patterns can therefore be obtained even with beam time of just several days.

It is known in the conventional analytical technical field that in order to reproduce atomic images obtained by analyzing photoelectrons and fluorescent X-rays emitted from an atom, it is necessary to record patterns (holograms) with X-rays having a plurality of energies, and the use of a large scale synchrotron radiation facility a plurality is indispensable for recording the patterns. Typically, using this type of testing facility requires about half a year from when a test is requested until when the test is carried out. Because many such facilities are public facilities, there are many cases in which they are not readily available. Also, when using the facilities, the time available for measurements is often limited and it is not possible to measure a large number of test samples. A state is thereby produced in which only a limited number of researchers can use [the facilities] (*1) under such limitations. Because of this situation, materials researchers and developers demanded development of a measurement device that contributes to expansion of the analytical technical field and basic research.

For example, in the prior art, the intensity of incident fluorescent X-rays was very weak and even if a hologram pattern could be obtained, the intensity of a fluorescent X-ray hologram being emitted from a measurement sample varied by measurement sample in the measurement devices provided at the laboratory level. Because about two months, which is more than approximately a few weeks, was required, there was a large burden on researchers.

Because of this situation, a new design was devised for irradiation with X-rays, and it was proposed to use a laboratory fluorescent X-ray holography device in which resolution is improved by one to two orders of magnitude compared with the planar crystals typically used in the field by employing curved graphite as the dispersive crystal for incident X-rays to increase the intensity of incident X-rays. However, this device had the disadvantages that the wavelength could not be freely varied since a rotating-anticathode X-ray generator was used, and that a sharp atomic image could not be obtained or the measurable samples were limited since sufficiently intense X-rays could not be obtained. Even in cases in which a high-speed fluorescent X-ray detection system was incorporated into the above-mentioned technology, the intensity of detected fluorescent X-rays was several thousand counts per second, and it was confirmed that a measurement time of one month or more was required.

Although many dopants of semiconductors or the like are nitrogen, phosphorus, and other X-ray elements (elements having an atomic number lower than that of Ca), measuring the fluorescent X-rays of X-ray elements in the atmosphere is difficult due to air absorption, and holograms focusing on these atoms cannot be measured.
Collecting X-rays is difficult in cases in which the X-rays are used as an excitation source, and microcrystals or the like several microns in size cannot be used as measurement objects.

As stated above, since X-rays were used as an excitation source in conventional devices, energy control and convergence was difficult to accomplish, and holograms having good contrast could not be obtained. Even when large-scale facilities were used, the devices were restricted in a variety of ways and were not easy to use.
Patent Document 1: JP-A 2001-330571
Non-patent Document 1: Oyo Butsuri, Volume 72, Issue 7 (2003) pp. 865-871, Issue Date July 10, 2003.

### DISCLOSURE OF THE INVENTION

### [Problems to Be Solved By the Invention]

An object of the present invention, which was devised to eliminate the disadvantages of the above-mentioned prior art, is to provide a inverse X-ray photoelectron holography device that facilitates energy control and convergence and produces a highly contrastive hologram, and to provide a measurement method thereof.

### MEANS FOR SOLVING THE ABOVE-MENTIONED PROBLEMS

In order to solve the aforementioned problems, the main point of the present invention is to use an electron beam as an excitation source instead of X-rays in the inverse X-ray photoelectron holography according to the present invention.
Means of solving the problems are as follows.

A inverse X-ray photoelectron holography device, characterized in having means for irradiating a measurement sample with an electron beam, specifically, an electron beam controlled so as to ensure convergence to several electron-volts or less for the energy band, and to the order of nanometers for the beam width; means for varying the incident angle and the rotation angle of the electron beam by varying the orientation of the measurement sample; and means for recording the intensity variations of a characteristic X-ray emitted when the measurement sample is excited, the variations being recorded as an atomic resolution hologram around an atom of a specific element.

A inverse X-ray photoelectron holography measurement method including irradiating a measurement sample with an electron beam, specifically, an electron beam controlled so as to ensure convergence to several electron-volts or less for the energy band, and to the order of nanometers for the beam width; varying the incident angle and the rotation angle of the electron beam by varying the orientation of the measurement sample in relation to the electron beam; and recording the intensity variations of a characteristic X-ray emitted when the measurement sample is excited, the variations being recorded as an atomic resolution hologram around an atom of a specific element; the inverse X-ray photoelectron holography measurement method further comprising: detecting the intensity as a characteristic X-ray of the atom of the measurement sample, whereby an object wave is generated as an electron wave scattered by a reference wave and a neighboring atom in holography where electrons incident on the measurement sample reach an atom generating a specific X-ray as an electron wave; and monitoring the intensity of the electron beam for which an interference pattern is formed by compounding the reference wave and the object wave.

Further provided is a inverse X-ray photoelectron holography measurement method including irradiating a measurement sample with an electron beam, specifically, an electron beam controlled so as to ensure convergence to several electron-volts or less for the energy band, and to the order of nanometers for the beam width; varying the incident angle and the rotation angle of the electron beam by varying the orientation of the measurement sample in relation to the electron beam; and recording the intensity variations of a characteristic X-ray emitted when the measurement sample is excited, the variations being recorded as an atomic resolution hologram around an atom of a specific element, the inverse X-ray photoelectron holography measurement method comprising: using an inverse technique, which is an optical reciprocity theorem of ordinary X-ray photoelectron holography, to perform a Fourier transform on an electric signal of a hologram pattern recorded at various wavelengths; and analyzing an atomic image of an atom periphery generated by a characteristic X-ray on the measurement sample.

### [Effect of the Invention]

With the inverse X-ray photoelectron holography device according to the present invention, the accelerating voltage can be varied to measure holograms having a plurality of wavelengths, and highly precise atomic images can be reproduced from a plurality of holograms having numerous wavelengths due to the use of an electron beam instead of X-rays.
The contrast of a fluorescent X-ray hologram obtained using X-ray interference has an amplitude that is about 0.1% less than the background intensity. However, a hologram obtained by inverse X-ray photoelectron holography, which measures electron interference patterns, has the advantage of extreme ease of measurement because the contrast is about 1 to 10%.
A device which uses an electron beam has the further advantage of being able to easily detect characteristic X-rays from a X-ray element being released because the operation must always be conducted in a vacuum.

Microcrystals, materials, and other items in which the samples to be measured are several microns or less in size can be measured by applying the present invention to a commercially available scanning electron microscope or transmission electron microscope and ensuring convergence of an electron beam to a size of several microns or less. The advantages are that the ease of use is improved in comparison with conventional measurement devices and that atomic images can be easily analyzed inside laboratories without the use of large-scale facilities.

### BRIEF DESCRIPTION OF THE DRAWINGS

FIG. 1 is a principle view showing inverse X-ray photoelectron holography according to the present invention;
FIG. 2 is a schematic view showing a inverse X-ray photoelectron holography measurement device according to the present invention;
FIG. 3 is a view showing a characteristic X-ray spectrum obtained by a inverse X-ray photoelectron holography measurement device;
FIG. 4 is a view showing oxygen K-line intensity variation obtained by a inverse X-ray photoelectron holography measurement device;
FIG. 5 is a conceptual view showing an electron image obtained by inverse X-ray photoelectron holography;
FIG. 6 is a principle view showing X-ray photoelectron holography;
FIG. 7 is a schematic view showing a laboratory fluorescent X-ray holography measurement device; and
FIG. 8 is a photograph and experiment arrangement diagram of a high-speed fluorescent X (*2) holography measurement device.

### BEST MODE FOR CARRYING OUT THE INVENTION

Embodiments of the present invention will be described in detail hereinafter with reference to the annexed drawings.

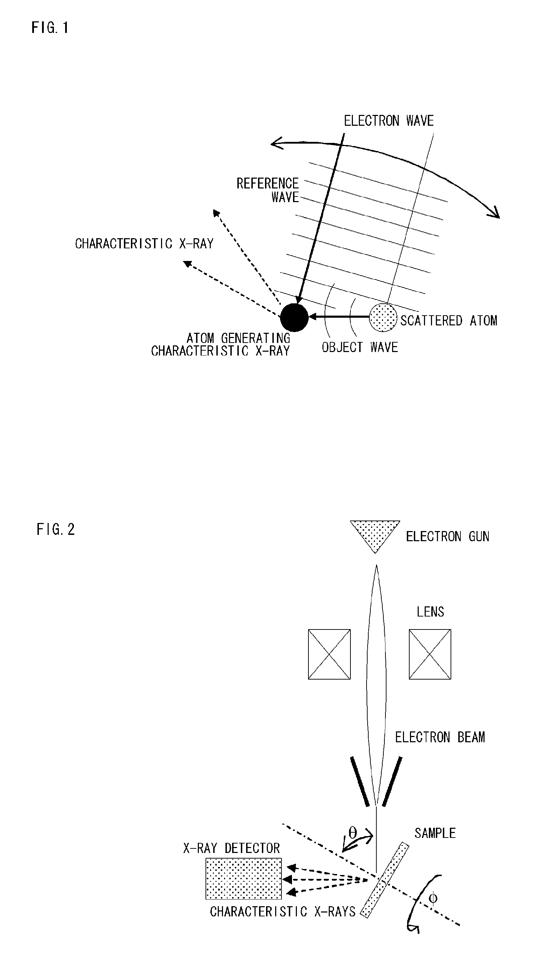

FIG. 1 shows the principle of inverse X-ray photoelectron holography. An embodiment of the present invention will be described using FIG. 1. Electrons (waves) are directed toward atoms that constitute a structure characteristic of the solid in a solid measurement sample from an electron gun by using a inverse X-ray photoelectron holography device or the like. The electrons are made to strike and excite the measurement sample, and characteristic X-rays are generated by the atoms that constitute the structure of the measurement sample. Because of the phenomenon in which the electrons arrive directly without being scattered by other atoms when the characteristic X-rays are generated, the electron wave in holography formed in this manner is considered to be a reference wave.

Next, a phenomenon occurs in which an electron wave that has caused a single cycle of scattering on a neighboring atom plays the role of an object wave. In this phenomenon, the reference wave and object wave interfere with each other, forming an electron standing wave. The standing wave pattern is varied by the incidence angle of the electrons emitted from the electron gun, and the intencity of the electron wave at the position of the characteristic X-ray emitting atom also varies. Namely, because the intencity of the electron wave is proportional to the intencity of the characteristic X-rays generated by the characteristic X-ray generating atom, a hologram at the atomic level around the characteristic X-ray generating atom is recorded by varying the angle of the electron beam and measuring the intensity variation of the characteristic X-ray. This measurement method uses an optical reciprocity theorem of X-ray photoelectron holography, a known method wherein a monochromatic X-ray is incident on the atoms and the angular distribution of the intensity of the emitted photoelectrons is measured.

A inverse X-ray photoelectron holography measurement device and measurement method that illustrates an embodiment of the present invention is described using FIG. 2.
A field emission scanning electron microscope (SEM) was used as the inverse X-ray photoelectron holography device shown in FIG. 2. By using an electron source for emitting electrons, a turntable for holding or positioning the measurement sample, and electrical control means (PC: personal computer, not shown) to control a motor (not shown, a typical general-purpose motor was used) in the device constitution, [the motor] (*1) is rotated by the rotating shaft at a predetermined rotational speed. The incident angle can be varied by driving a motor that is separate from the aforementioned motor (not shown). A measurement sample is attached to the turntable, and an electron beam is directed toward the measurement sample. Namely, the plane at which the electron beam is incident on the measurement sample is varied.
In order to obtain a sharp atomic image when implementing the present invention, a hologram must be recorded in a wide wave-number space. To obtain this result, measurements are preferably performed in the widest possible scan range so that the rotation angle φ ranges from 0 to 360 degrees, and the incident angle θ ranges from 0 to about 80 degrees.

The electron beam emitted toward the measurement sample by the field-emission scanning electron microscope is incident on the measurement sample; the part of the measurement sample irradiated with the electron beam, i.e., the atoms of the measurement sample, are excited; and characteristic X-rays are emitted. A reference wave, which is an electron wave that is not scattered, is generated; an object wave is then generated as an electron wave resulting from the scattering of the reference wave by a neighboring atom; and an interference pattern is formed by the reference wave and object wave. Because this interference pattern has greater intensity than an interference pattern obtained by fluorescent X-ray holography, the measurement precision of the X-ray detector described hereinafter can be improved.

An X-ray detector for detecting the intensity of characteristic X-rays is then used. The characteristic X-rays which are incident on the detector are replaced with an electric signal by the sensing of the X-ray detector. An SSD (semiconductor detector) was used as the X-ray detector in the present invention, but the detector itself may also be an SDD (silicon drift detector), a SiPIN diode, or another energy distribution X-ray detector, or a wavelength distribution detector obtained by combining a dispersive crystal and a scintillation counter or the like.
The role of the detector is to detect interference (hologram) patterns. The electric signal output of the X-ray detector is transmitted via an interface to an image processing device or PC (not shown) for storage. The PC has the role of performing a Fourier transform on the hologram information (image), which is the electric signal obtained by the X-ray detector, to replace the signal with information in the form of an atomic image, and analyzing the image as necessary information.

The results obtained from an experiment performed based on the present invention are described hereinafter. Following is an example of a measurement experiment involving inverse X-ray photoelectron holography in which a field emission scanning electron microscope was prepared and SrTiO₃ (strontium titanate) monocrystals doped with 0.05 wt% Nb was used for the sample. First, the accelerating voltage of the electron beam (EB) emitted by the field emission scanning electron microscope was set to 6 kV, and the beam was made to converge to a diameter of 100 mm.

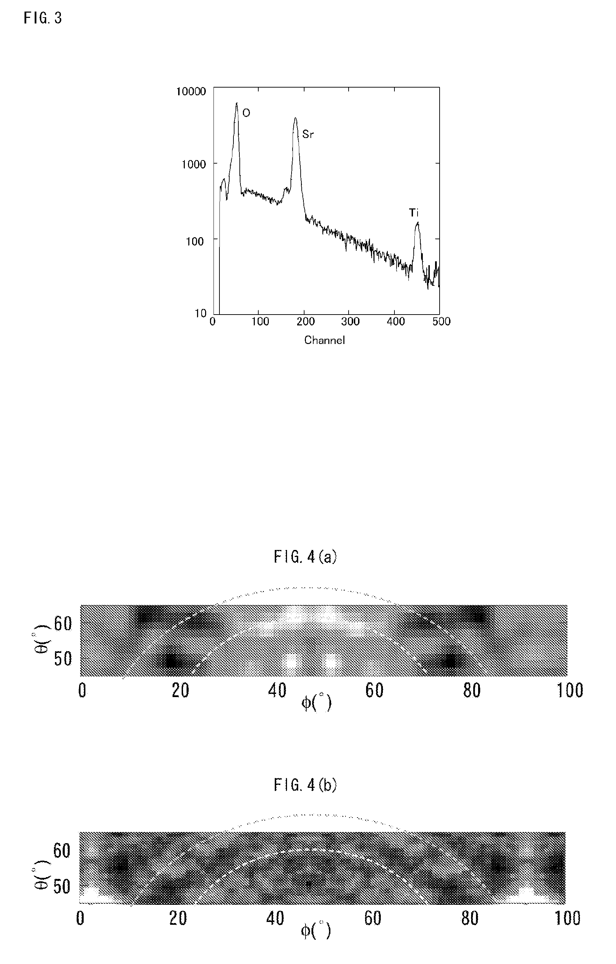

A characteristic X-ray spectrum such as the one shown in FIG. 3, i.e., a spectrum of the measurement sample, was obtained as information obtained when the measurement sample was irradiated with the electron beam. For example, the oxygen K-line was observed at channel 53, the strontium L-lime was observed near channel 183, and the Ti K-line was observed near channel 453. The horizontal axis in FIG. 3 corresponds to the measured X-ray energy, and the vertical axis corresponds to the intensity.

Next, the characteristic X-ray spectrum was measured within the angular scan ranges 45° ≦ θ ≦ 65° and 0° ≦ φ ≦ 100°. Particularly, the intensity variation of the oxygen K-line was plotted in this case. FIG. 4 shows the result. FIG. 4(a) shows the actual measurement values, and FIG. 4(b) shows the simulation. As can be confirmed by viewing FIG. 4, when compared with a simulation based on the principle of X-ray photoelectron holography, the arc-shaped pattern shown by the dashed line can be reproduced, and nearly ideal measurement results are therefore obtained.

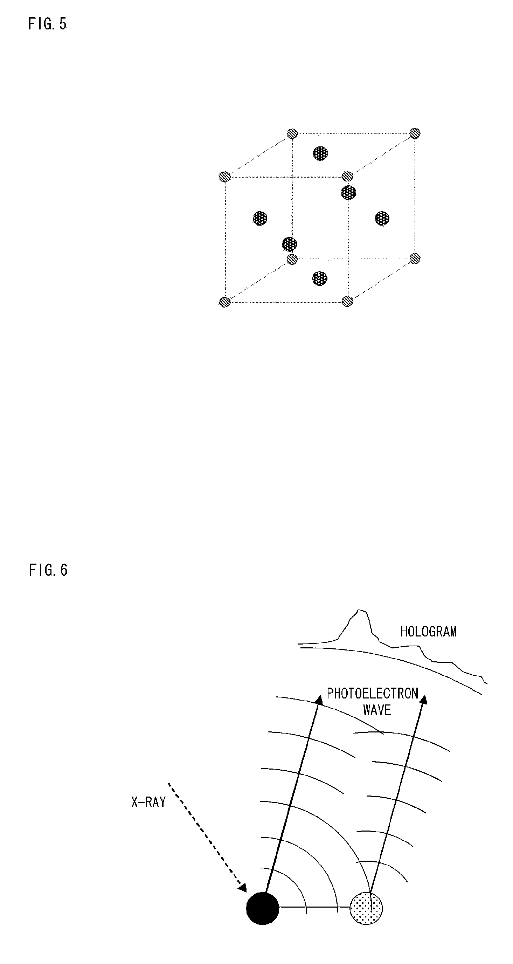

The angular scan range from measuring holograms was narrow in the measurements according to the present invention, making it difficult to reproduce the resulting information by a Fourier transform, but because the measurements agreed with theoretical calculations, recording holograms within a wide angular range made it possible to reproduce highly precise atomic images composed of constituent elements such as strontium, oxygen, and titanium, as shown in FIG. 5.

A preferred inverse X-ray photoelectron holography device and measurement method have been described above, but the present invention shall not be limited to this option alone and can be appropriately modified within a range that does not depart from the scope of the present invention.
FIG.1
   ELECTRON WAVE
   REFERENCE WAVE
   CHARACTERISTIC X-RAY
   ATOM GENERATING CHARACTERISTIC X-RAY
   OBJECT WAVE
   SCATTERED ATOM
FIG. 2
   ELECTRON GUN
   LENS
   ELECTRON BEAM
   X-RAY DETECTOR
   SAMPLE
   CHARACTERISTIC X-RAYS
FIG. 6
   HOLOGRAM
   PHOTOELECTRON WAVE
   X-RAY
FIG. 7
   GONIOMETER
   CURVED GRAPHITE
   SAMPLE
   ROTATING-ANTICATHODE X-RAY GENERATOR
   HIGH-SPEED SEMICONDUCTOR DETECTOR
FIG. 8
   INCIDENT X-RAY
   SAMPLE
   FLUORESCENT X-RAY
   CYLINDRICAL DISPERSIVE CRYSTAL

## Claims

1. A inverse X-ray photoelectron holography device, **characterized in** having:
means for irradiating a measurement sample with an electron beam;
means for varying the incident angle and the rotation angle of the electron beam by varying the orientation of the measurement sample in relation to the electron beam; and
means for recording the intensity variations of a characteristic X-ray emitted when the measurement sample is excited, the variations being recorded as an atomic resolution hologram around an atom of a specific element.

2. The inverse X-ray photoelectron holography device according to claim 1, wherein the electron beam is an electron beam controlled so as to ensure convergence to several electron-volts or less for the energy band, and to the order of nanometers for the beam width.

3. A inverse X-ray photoelectron holography measurement method including:
irradiating a measurement sample with an electron beam;
varying the incident angle and the rotation angle of the electron beam by varying the orientation of the measurement sample in relation to the electron beam; and
recording the intensity variations of a characteristic X-ray emitted when the measurement sample is excited, the variations being recorded as an atomic resolution hologram around an atom of a specific element; the inverse X-ray photoelectron holography measurement method **characterized in** comprising:
detecting the intensity as a characteristic X-ray of the atom of the measurement sample, whereby an object wave is generated as an electron wave scattered by a reference wave and a neighboring atom in holography where electrons incident on the measurement sample reach an atom generating a specific X-ray as an electron wave; and
monitoring the intensity of the electron beam for which an interference pattern is formed by compounding the reference wave and the object wave.

4. A inverse X-ray photoelectron holography measurement method, comprising:
irradiating a measurement sample with an electron beam;
varying the incident angle and the rotation angle of the electron beam by varying the orientation of the measurement sample in relation to the electron beam; and
recording the intensity variations of a characteristic X-ray emitted when the measurement sample is excited, the variations being recorded as an atomic resolution hologram around an atom of a specific element; the inverse X-ray photoelectron holography measurement method **characterized in** comprising:
using an inverse technique, which is an optical reciprocity theorem of ordinary X-ray photoelectron holography, to perform a Fourier transform on an electric signal of a hologram pattern recorded at various wavelengths; and
analyzing an atomic image of an atom periphery generated by a characteristic X-ray on the measurement sample.

5. The inverse X-ray photoelectron holography measurement method according to claim 3 or 4, wherein the electron beam is an electron beam controlled so as to ensure convergence to several electron-volts or less for the energy band, and to the order of nanometers for the beam width.
